# FASCICULE DE BREVET EUROPEEN

(11) **EP 2 024 103 B1**
(45) Date de publication et mention de la délivrance du brevet: **29.10.2014**
(21) Numéro de dépôt: 07731451.6
(22) Date de dépôt: 11.05.2007
(51) Int. Cl.: B05D 1/00, B05D 3/04, B01D 1/20, B82Y 30/00, B82Y 40/00, B05D 1/20

(54) **PROCEDE DE DEPOT DE FILM MINCE NANOMETRIQUE SUR UN SUBSTRAT**
VERFAHREN ZUM AUFTRAGEN EINER NANOMETRISCHEN DÜNNSCHICHT AUF EINEM SUBSTRAT
METHOD FOR DEPOSITING A NANOMETRIC THIN FILM ON A SUBSTRATE

(30) Priorité: 15.05.2006 FR 0604297
(43) Date de publication de la demande: 18.02.2009
(73) Titulaire: COMMISSARIAT A L'ENERGIE ATOMIQUE, 75015 Paris (FR)
(72) Inventeur: BENATTAR, Jean-Jacques, F-91370 Verrières le Buisson (FR)
(74) Mandataire: Boubal, Denis Henri Jacques
(86) Numéro de dépôt international: PCT/FR2007/000810
(87) Numéro de publication internationale: WO 2007/132089

(56) Documents cités:
- JIAN JIN, JIANGUO HUANG, IZUMI ICHINOSE: "Dried foam films: self-standing, water-free, reversed bilayers of amphiphilic compounds" ANGEW. CHEM. INT. ED., 24 juin 2005 (2005-06-24), pages 4532-4535, XP002417639
- BENATTAR JJ, NEDYALKOV M, FUK K L, OPHELIA K.C. TSUI: "Adhesion of a free-standing newton black film onto a solid substrate" ANGEW. CHEM. INT. ED., 23 mai 2006 (2006-05-23), XP002417640 23 mai 2006 & WO 2006/096571 A2 (HARVARD COLLEGE [US]; WEITZ DAVID A [US]; LINK DARREN ROY [US]; UTADA) 14 septembre 2006 (2006-09-14)

## Description

L'invention concerne le domaine des films minces déposés sur un substrat, elle concerne plus particulièrement le dépôt de films minces, de type film noir, et notamment les films noirs de Newton (NBF).

Les films noirs correspondent à un état d'équilibre d'un film de tensioactifs, dit film libre, qui est généralement obtenus après le drainage du solvant qu'il contient. Leur structure est généralement déterminée par réflectivité X, qui donne accès aux épaisseurs, rugosités et densités des différentes strates de ce film nanométrique. On distingue deux types de film noir : le film noir commun (CBF) et le film noir de Newton (NBF). Ces films sont souvent étudiés après formation à partir d'une solution de tensioactif dans l'eau. A la différence des membranes biologiques, dans les films noirs, ce sont les têtes polaires de la bicouche de tensioactif qui sont en contact et non les chaînes aliphatiques, en effet le milieu extérieur correspond à un milieu aqueux dans le premier cas alors que dans le second il s'agit généralement d'une atmosphère gazeuse sensiblement proche de l'air ambiant.

Le film noir commun correspond à un état métastable du film qui contient encore des molécules d'eau à l'état liquide, ce type de film peut conduire à la formation d'un film noir de Newton par évaporation de l'eau liquide.

Le film noir de Newton est constitué de deux parois de tensio-actif, accolées l'une à l'autre, sans eau liquide. La présence d'eau dans le film est néanmoins détectée mais elle correspond à des molécules solidement emprisonnées à l'intérieur du film et qui participent à sa cohésion. Ces molécules ne sont pas libres et ne sont pas susceptibles de quitter le film dans la mesure où celui-ci ne subit pas de traitement extrême. La perte de ces molécules d'eau est souvent synonyme de destruction du film.

Il a été montré que les films noirs de Newton constituent un système modèle parfaitement organisé pour l'étude des interactions dans des systèmes physico-chimiques très variés (tensio-actifs, polymères, protéines). Ainsi par exemple, une couche de protéines et de cyclodextrines modifiées ont déjà été insérées à l'intérieur d'un film noir.

Les films noirs, malgré le degré d'organisation que certain peuvent présenter, sont d'une grande fragilité. Ainsi, les plus simples perturbations peuvent conduire à leur rupture lorsqu'ils sont étudiés selon les méthodes traditionnelles. De cette fragilité découle également l'impossibilité de trouver des applications industriellement viables pour ce type de structure.

Ainsi, le document Jian Jin et al, « Dried Foam Films: self-standing, water-free, reversed bilayers of amphiphilic compounds », Angew. Chem. Int. Ed. 2005, 44, 4532-4535, mentionne la formation d'un film noir à l'aide d'un support poreux traversant de façon verticale une solution contenant des tensioactifs. Un film noir se forme au niveau des pores du support et est ensuite séché par évaporation. Ce film est cependant fragile et ne peut subir, en l'état, d'analyses, notamment par microscopie.

Au travers la présente invention les inventeurs apportent une réponse simple et élégante à la fragilité des films noirs qui ouvre par ailleurs la voix pour de nombreuses applications

L'invention correspond notamment à un procédé de dépôt de film mince nanométrique sur un substrat à partir d'une solution liquide contenant au moins un tensioactif à une concentration supérieure ou égale à la concentration micellaire critique (cmc), caractérisé en ce qu'il comporte les étapes suivantes :
- Formation d'un film à partir de la solution,
- Mise en contact avec le substrat,
- Dépôt du film sur le substrat.

L'invention concerne plus particulièrement les films minces nanométriques de type film noir et plus spécifiquement les films noirs de Newton (NBF).

Les tensioactifs sont des molécules comportant une partie lipophile (apolaire) et une partie hydrophile (polaire). Parmi les tensioactifs utilisables selon l'invention, on peut notamment citer :
i) les tensioactifs anioniques dont la partie hydrophile est chargée négativement ; ils sont de préférence choisis parmi les composés de formule (III) suivante :

   R₆-A⁻, Cat⁺ (III)

   dans laquelle :
   - R6 représente un groupe aryle ou alkyle en C₁-C₂₀, de préférence en C₁-C₁₄, avantageusement en C₆-C₁₄,
   - A⁻ est anion ou un polyanion choisi notamment parmi le sulfonates, les sulfates, les phosphates, les carboxylates, les sulfosuccinates, etc.,
   - Cat⁺ est un contre ion cationique, de préférence choisi parmi l'ion ammonium (NH₄⁺), les ammoniums quaternaires tels que tetrabutylammonium, et les cations alcalins tels que Na⁺, Li⁺ et K⁺ ;
      Il est possible qu'un même tensioactif possède plusieurs groupe de type A⁻, par exemple les tensioactifs géminés en possèdent deux.
ii) les tensioactifs cationiques dont la partie hydrophile est chargée positivement ; ils sont de préférence choisis parmi les ammoniums quaternaires de formule (IV) suivante :

   (R₇)₄-N⁺, An⁻ (IV)

   dans laquelle :
   - les groupes R₇, identiques ou différents, représentent une chaîne aliphatique, par exemple une chaîne alkyle en C₁-C₂₀, de préférence en C₁-C₁₄,
   - An⁻ est un contre ion anionique choisi notamment parmi les dérivés du bore tels que le tetrafluoroborate ou les ions halogénures tels que F⁻, Br-, I⁻ ou Cl⁻,
      Il est possible qu'un même tensioactif possède plusieurs groupes chargés positivement, par exemple les tensioactifs géminés en possèdent deux ;
iii) les tensioactifs zwittérioniques qui sont des composés neutres possédant des charges électriques formelles d'une unité et de signe opposé ; ils possèdent un nombre de charge pair et sont de préférence choisis parmi les composés de formule (V) suivante :

   Z⁻-R₈-Z⁺ (V)

   dans laquelle :
   - R₈ représente une chaîne alkyle en C₁-C₂₀, de préférence en C₁-C₁₄, avantageusement en C₆-C₁₄,
   - Z⁻ représente une fonction chargée négativement portée par R₈, de préférence choisie parmi sulfate et carboxylate,
   - Z⁺ représente une fonction chargée positivement, de préférence un ammonium ;
iv) les tensioactifs amphotères qui sont des composés se comportant à la fois comme un acide ou comme une base selon le milieu dans lequel ils sont placés ; ces composés peuvent avoir une nature zwittérionique, les acides aminés sont un exemple particulier de cette famille, les savons préparés par saponification en sont un autre,
v) les tensioactifs neutres (non-ioniques) : les propriétés tensioactives, notamment l'hydrophilie, sont apportées par des groupements fonctionnels non chargés tels qu'un alcool, un éther, un ester ou encore une amide, contenant des hétéroatomes tels que l'azote ou l'oxygène ; en raison de la faible contribution hydrophile de ces fonctions, les composés tensioactifs non ioniques sont le plus souvent polyfonctionnels.

Les tensioactifs chargés peuvent bien entendu porter plusieurs charges.

Parmi les différentes significations du groupement aryle du groupe R₆ des composés de formule (III) ci-dessus, on peut notamment citer le cycle phényle, substitué ou non, et parmi les différentes significations du groupement alkyle R₆, les chaînes alkyle en C₁-C₂₀, de préférence en C₁-C₁₄, avantageusement en C₆-C₁₄.

A titre de composé de formule (III), on préfère utiliser le dodécylsulfate, le dodécylbenènesulfonate (SDBS), le palmitate, le stéarate, le myristate, le di(2-éthylhexyl) sulfosuccinate, le méthylbenzène sulfonate et l'éthylbenzène sulfonate, le dipalmitoyl phosphatidylglycerol, en présence d'un cation alcalin, tel que le sodium.

Parmi les différentes significations des groupes R₇ des ammoniums quaternaires de formule (IV) ci-dessus, on peut notamment citer les groupes méthyle, éthyle, propyle, butyle et tetradécyle.

A titre de composé de formule (IV), on préfère utiliser les halogénures d'alkylpyridinium portant une chaîne aliphatique en C₁-C₁₈, les halogénures d'alkylammonium comme le bromure de tetradécyltriméthyle ammonium (TTAB), le bromure d'hexadécyltriméthylammonium (CTAB) ou le bromure de dodécyltriméthylammonium ou bien encore des phospholipides par exemple sel de N-[1-(2,3-dioleyloxy)propyl]trimethylammonium.

A titre de tensioactif zwittérionique, on peut notamment citer le N,N-diméthyldodécylammoniumbutanate de sodium, le diméthyldodécylammonium propanate de sodium et les acides aminés, le dodecylphosphocholine (C12PC), les phospholipides telles que dimyristoyl phosphatidylcholine, dipalmitoyl phosphatidylcholine, dioleoyl phosphatidylcholine, dimyristoyl phosphatidylethanolamine, dipalmitoyl phosphatidylethanolamine, dioleoyl phosphatidylethanolamine.

A titre de tensioactif amphotère, on peut notamment citer le lauroamphodiacétate de disodium, les bétaïnes comme l'alkylamidopropylbétaïne ou la laurylhydroxysulfobétaïne.

A titre de tensioactif non-ioniques, on peut en particulier citer les polyéthers comme les tensioactifs polyéthoxylés tels que par exemple les dérivés de polyethylèneglycol et les polyether et notamment de type CᵢEⱼ, c'est-à-dire CᵢH₂ᵢ₊₁(OCH₂CH₂)ⱼOH, dont le C₁₂E₆ et le lauryléther de polyéthylèneglycol (POE23 ou Brij ® 35, C₁₂E₂₃), le Tween 20®, le Tween 80®, le Triton X100®, le Triton X100-R®, les polyols (tensioactifs dérivés de sucres) en particulier les alkylates de glucose tels que par exemple l'hexanate de glucose, les tensio-actifs fluorés comme le C₆F₁₃SOTHAM (C₆F₁₃CH₂CH₂SOCH₂CH₂CONH(CH₂CH₂OH)₃.

La liste n'est bien entendu pas exhaustive, parmi les tensioactifs on peut trouver des structures très complexes préparées à partir de molécules dont la structure a été modifiée de telle sorte qu'elles présentent des propriétés tensioactives, ainsi par exemple, des groupes chimiques particuliers peuvent être aménagés dans les protéines ou les cyclodextrines pour qu'elles présentent des propriétés tensioactives.

Le solvant de la solution peut être constitué d'un mélange de solvant, à ce titre, le terme « solvant » peut désigner tant un mélange qu'un solvant unique. Le solvant sera choisi en fonction du tensio-actif employé. Typiquement le solvant sera choisi parmi les solvants polaires et plus particulièrement parmi les solvants protiques polaires, dans le cas des mélanges il s'agira bien sur des mélanges présentant les caractéristiques d'un solvant protique polaire. Ainsi par exemple le solvant peut être choisi parmi l'eau, le toluène, l'acide acétique, le méthanol, l'éthanol, l'acétonitrile, la diméthylformamide, le chloroforme ou leurs mélanges. L'eau est le solvant préféré, typiquement elle sera présente lorsqu'un mélange de solvant est employé.

Il est préférable que le solvant employé soit pur et les inventeurs considèrent qu'il est utile de porter un grand soin à son éventuelle purification.

La concentration en le sensioactif est supérieure ou égale à la cmc, elle sera ainsi par exemple comprise entre la cmc et cent fois sa valeur, de préférence entre cinq et quinze fois. Il est préférable que la solution soit homogénéisée avant d'être utilisée, pour cela il est recommandé de recourir à une agitation, généralement opérée par ultrasons ou par agitateur magnétique. Ainsi par exemple pour le C₆F₁₃SOTHAM elle sera généralement comprise entre 0,5 et 1 g.l⁻¹, pour le C₁₂E₆ aux alentours de 1 g.l⁻¹ ou pour le CTAB elle pourra être proche de 5 mM.

La solution sera de préférence homogène, il est pour cela recommandé de l'agiter avant son utilissation.

Le procédé sera avantageusement réalisé dans une enceinte fermée et de préférence étanche. Par ailleurs, il est recommandé d'effectuer le procédé sous une atmosphère saturée en solvant de solution afin de prévenir l'évaporation du solvant dans le film noir pour lui assurer une plus grande stabilité.

Le choix du substrat relève de l'utilisateur et du type d'utilisation qu'il souhaite faire du film qui sera déposé. D'une manière générale tout type de substrat peut être employé, ainsi, selon l'invention, il est possible de déposer un film mince sur un substrat de nature organique ou inorganique. Il y a lieu de remarquer que seule la surface du substrat sur laquelle sera déposée le film importe dans le cadre de la présente invention, aussi lorsque le terme substrat est employé il n'est nullement limitatif et correspond au matériau constituant la surface directement en contact avec le film, ainsi un matériau composés de plusieurs couches de compositions différentes, comme une surface métallique greffée de molécules organiques, sera considéré comme un substrat métallique si la surface sur laquelle est déposée le film est la surface métallique. Le terme « surface du substrat » correspond généralement à la surface du substrat sur laquelle le film est déposé.

Le substrat employé selon l'invention possédera de préférence une affinité suffisante pour les chaînes hydrophobes du tensioactif, la surface du substrat présente dans ce cas une faible mouillabilité avec le solvant qui est souvent protique et polaire. La mouillabilité d'une surface, qui est fonction de l'énergie de surface, peut être déterminée par le test de la goutte (dépôt d'un produit fluide ou solide déformable) s'étalant sur une surface. L'angle de contact θ, tel que présenté par T. Young, Phi. Trans. R. Soc. London 95 (1805) 65, fournit une mesure simple et efficace de l'interaction entre le tensioactif et le substrat. L'équation de Young relie l'angle de contact θ à l'énergie de surface du produit par la relation: σ_{SG}= σ_{SL} + σ_{LGθcos} θ, où σ_{SG} est l'énergie ou tension de surface de la zone solide-gaz, σ_{SL} l'énergie ou tension de surface de la zone frontalière entre le support et l'échantillon et σ_{LG}, l'énergie ou tension de surface liquide-gaz. D'autres méthodes peuvent bien entendu être employées. Il est ainsi souhaitable que θ soit supérieur à 45°, de préférence à 80° et le plus proche possible de, voir supérieur à 90°.

Parmi les substrats organiques il est par exemple possible d'utiliser des polymères, des substrats plus complexes comme du matériel biologique. Parmi les substrats inorganique il est possible par exemple d'utiliser des métaux, tel que les métaux de transition comme Fe, Ti, Au, Pt, Ag, ainsi que des alliages, des semi-conducteurs comme le carbone, par exemple sous forme diamant ou graphite, le carbure de silicium ou encore le silicium, le mica et le verre également La plupart des substrats présentant une surface cristalline peuvent être employées. D'une manière général il est possible de traiter la surface du substrat pour lui donner les propriétés les plus appropriées au cas d'espèce, par exemple une silanisation, qui correspond au greffage de chaînes alkyles, peut être réalisée sur la surface d'un substrat de verre, de mica ou de silicium avec sa couche d'oxyde native pour augmenter son affinité pour les chaînes hydrophobes du tensioactif et diminuer sa mouillabilité vis-à-vis du solvant. De la même manière, une surface de silicium peut être traitée à l'aide d'une solution contenant du NH₄F pour obtenir après rinçage et séchage une surface de silicium terminée H qui est particulièrement hydrophobe et lipophile et qui aura peu d'affinité pour les solvants protiques comme l'eau.

Le substrat peut également être mixte, ainsi par exemple un substrat composé de différents matériaux comme Si et Au sera considéré comme un substrat mixte. Les substrats utilisés dans le domaine de l'électronique sont généralement de nature mixte et sont tout à fait adaptés à la présente invention.

Il est préférable que le substrat utilisé soit propre et ne présente pas d'impuretés afin de ne pas introduire d'éléments étrangers entre le film et le substrat. Pour cela, et dans la mesure où cela correspond au désir de l'utilisateur, il est recommandé de nettoyer la surface du substrat. Le type de traitement doit être adapté au substrat et correspond aux méthodes employées et connues par l'homme du métier. Ainsi par exemple pour une surface de silicium il est possible d'employer un traitement à l'acide sulfurique et au peroxyde d'hydrogène, il s'agit d'une solution de type piranha, pour éliminer les contaminants organiques. Préalablement on peut aussi effectuer un rinçage à l'aide d'un solvant organique comme l'acétone ou l'éthanol en plongeant le contenant dans un bain à ultrasons pour en éliminer les poussières et les graisses.

La topographie de la surface du substrat est variable. A l'échelle macroscopique il est possible que la surface soit plane, cependant il est également possible d'employer une surface non plane en gardant à l'esprit que le dépôt du film sur une surface non plane à l'échelle macroscopique est susceptible de ne pas recouvrir l'ensemble de la surface. D'une manière générale pour qu'une portion définie de la surface du substrat soit recouverte il faut que le film formé à partir de la solution ait une surface au moins égale à celle-ci. Ainsi il est possible d'employer une topologie de surface présentant des reliefs, dans ce cas le film épousera généralement les reliefs sans nécessairement les recouvrir jusqu'à leur base.

Aux échelles inférieures à l'échelle macroscopique, comme à l'échelle microscopique par exemple, il est bien entendu aussi envisageable de prévoir une topologie particulière, par exemple si le substrat correspond à un circuit électronique, le cas de figure est assez similaire aux cas macroscopiques mais en général la surface du film est suffisamment importante pour épouser l'ensemble des aspérités présentes à la surface.

Les différentes étapes du procédé sont de préférence réalisées de manière successive, elles peuvent toutefois être réalisées de manière quasi-simultanée mais le résultat est moins satisfaisant dans ce cas.

L'étape de formation d'un film à partir de la solution peut être réalisée par différents procédés connus dans le domaine. Les techniques de préparation de films de tensioactifs connues de l'homme de l'art sont applicables à la présente invention. Typiquement le film sera formé à l'aide de l'action mécanique d'un moyen de formation de film qui traverse la surface de la solution. Dans la mesure où un utilisateur ne parvient pas à réaliser de film suffisamment stable pour être déposé, il est recommandé de faire varier la concentration en tensioactif, généralement il est souhaitable de l'augmenter pour avoir une plus grande couverture de surface à l'interface solvant-milieu extérieur (air en générale). Les films instables se brisent spontanément

Un moyen de formation de film peut notamment être constitué par un support solide au sein duquel est aménagé un espace vide. Ledit espace est généralement immergé dans la solution et un film épousant son périmètre est alors formé après un déplacement relatif de la surface de la solution par rapport à l'espace aménagé dans le moyen. Selon un mode particulier de réalisation le moyen est déplacé de telle sorte que l'espace aménagé en son sein traverse la surface. Ce mode de réalisation correspond à la technique usuellement employée pour préparer des films noirs, comme ceux du type film noir de Newton, le moyen correspond dans ce cas à un cadre, typiquement de forme sensiblement rectangulaire, placé dans un plan perpendiculaire à la surface de la solution. Le cadre peut être ouvragé de manière plus complexe et permettre également la formation de plusieurs films, il peut également permettre la formation de films non plans, et ainsi par exemple avoir la forme d'une moitié de cylindre. Le déplacement du cadre au travers la surface de la solution conduit à la formation du film.

Selon un autre mode de réalisation le moyen est placé à proximité de la surface, dans la solution ou à l'extérieur de celle-ci. Selon ce mode de réalisation la surface de la solution est déplacée alors que le moyen reste, fixe. Pour assurer un déplacement de la solution il est souhaitable d'employer un moyen de déformation de la surface. Ce moyen assure une variation de la hauteur moyenne de la surface de telle sorte qu'un contact s'établisse entre le périmètre du moyen de formation de film et la surface de la solution de manière à former un film. A titre de moyen de déformation de la surface il est possible d'employer une onde, celle-ci peut être produite notamment par un dispositif vibrant placé au sein de la solution.

Selon un mode de réalisation particulier il est possible d'utiliser un moyen de déformation de la surface et de formation de film. Un tel moyen assure en général la formation d'un film par déformation de la surface et la mise à profit des propriétés des tensio-actifs. Ainsi par exemple il est possible que le moyen de déformation soit un gaz, l'injection d'un gaz dans la solution de telle sorte qu'une bulle apparaisse à la surface de la solution assure à la fois la formation d'un film et la déformation de la surface la solution et de celle du film. La taille de la bulle peut être contrôlée par la quantité de gaz injectée. Typiquement le diamètre de la bulle sera compris entre 1 mm et 5 cm.

Il est bien entendu possible de combiner ces moyens pour parvenir à la formation d'un film, ainsi on peut envisager un dispositif poreux affleurant la surface de la solution au travers duquel un gaz serait injecté de telle sorte qu'une bulle se forme à partir du dispositif poreux. Le moyen de formation de film et le moyen de déformation de la surface étant dans ce cas intimement liés.

L'étape de mise en contact du film formé à partir de la solution suit celle de formation du film à partir de la solution. Elle est généralement réalisée par un mouvement relatif du substrat par rapport à la surface du film. Ainsi le substrat peut être déplacé pour établir le contact avec le film, comme le film peut être déplacé, typiquement à l'aide d'un moyen de formation du film, ou sa surface déformée, typiquement à l'aide d'un moyen de déformation de la surface, pour établir le contact avec le substrat.

Le délai entre les deux étapes peut-être un intervalle de temps important en comparaison au temps nécessaire pour former le film à partir de la solution. Cet intervalle dépend typiquement des attentes de l'utilisateur. Considérant le phénomène physique correspondant à la formation d'un film à partie d'une solution de tensio-actif, il est connu que la concentration en solvant présent à l'intérieur du film diminue au court du temps modifiant ainsi les propriétés du film ainsi que sa qualification. Différents stades d'évolution d'un film libre, comme celui de film noir commun (CBF) et film noir de Newton (NBF), peuvent être rencontrés.

Il est ainsi possible de réaliser le dépôt lorsque le film adopte une morphologie particulière. Ainsi par exemple, lorsque le film est formé à partir de la solution il est possible de suivre l'évolution de son épaisseur par une simple observation optique. Le drainage du solvant du film, par des phénomènes fluidiques connus (capillarité, gravité et diffusion), conduit généralement à une diminution de l'épaisseur du film, dans le cas d'un film sous forme d'une bulle essentiellement hémisphérique le phénomène est observé sur le sommet l'hémisphère, il correspond à un changement d'état du film mince contenant une proportion important de solvant vers un film noir de Newton. Le film est alors trop fin pour réfléchir la lumière visible.

D'une manière générale l'épaisseur du film est comprise entre 1 et 100 nanomètres, et plus particulièrement de un à quelques dizaines de nanomètres selon qu'il soit par exemple un NBF ou un CBF. Le film contient généralement une quantité très limitée de solvant qui est maintenue de manière particulièrement forte et participe à la cohésion de l'ensemble de la structure, à titre d'exemple pour des films obtenus dans de l'eau, la couche d'eau aura une épaisseur de quelques angströms pour un NBF et quelques centaines d'angström pour un CBF. La surface couverte par un film après dépôt est de l'ordre du cm².

Selon un mode de réalisation particulier il est préférable de déposer le film lorsqu'il est sous forme de film noir commun ou de film noir de Newton, plus particulièrement de film noir de Newton. Le dépôt sous forme d'un NBF assure une plus grande stabilité au film et permet notamment de conserver l'organisation établie parmi les molécules qui le composent. L'utilisation d'un moyen de formation de film poreux facilite le drainage de l'épaisseur du film et permet d'obtenir rapidement un film noir de Newton. Le laps de temps entre l'étape de formation et de dépôt correspond généralement au temps de drainage du solvant. Pour un film hémisphérique d'environ 2-3 cm de diamètre le temps de drainage pour parvenir à la structure d'un NBF est souvent inférieur à 15 minutes. Selon les conditions expérimentales il peut toutefois être plus important et atteindre quelques heures. L'analyse du film déposé par des techniques d'étude de surface comme la microscopie à force atomique ou encore l'utilisation de la réflectivité des rayons X permettra de contrôler le type de structure obtenu.

Il est également possible de déposer des films plus épais (de 25 à 50 nm) dont la couleur observée est grise-argentée, sur les surfaces. Le film ainsi déposé est tout à fait homogène.

La solution pourra contenir en outre des sels afin de modifier la force ionique de la solution. La variation de la force ionique peut permettre de passer de l'état d'équilibre métastable de film noir commun (CBF) à film noir de Newton (NBF).

Lorsque le contact est établi entre le film et le substrat il s'établit des interactions moléculaires qui permettent une adhérence importante. Le contact est établi typiquement à l'aide du mouvement relatif du substrat et de la surface du film et jusqu'à dépôt complet du film. Le dépôt est complet lorsque le film n'est plus lié à la surface de la solution ou au moyen de formation de film ou de déformation de la surface. Le phénomène est généralement rapide à l'échelle macroscopique et semble spontané, il correspond à ce qui semble être une rupture brutale de la surface du film qui s'étend entre le substrat et la surface de la solution ou le moyen de formation de film. Par exemple dans le cas d'un substrat macroscopiquement plan mis au contact d'un film sous forme d'une bulle, on assiste à la formation d'un volume grossièrement cylindrique s'étendant de la surface du substrat jusqu'à la surface de la solution ou le moyen de formation de film.

Il y a lieu de remarquer que le drainage du film peut aussi avoir lieu sur le substrat seules les molécules de solvant liées aux têtes polaires restent définitivement emprisonnées dans le film.

Le procédé est généralement conduit dans les conditions normales de température et de pression (CNTP), il est néanmoins possible de faire varier ces paramètres selon le souhait de l'utilisateur. La température a généralement peu d'incidence lorsque le procédé est effectué dans les CNTP (pour de faibles variations de température), il est préférable que le tensioactif soit soluble à la température à laquelle le procédé est effectué. Il est possible de faire varier plus spécifiquement la température du film en utilisant un dispositif produisant des rayonnements infrarouge près du film. Un tel traitement conduit généralement à un amincissement localisé de l'épaisseur du film, en particulier dans le cas des films noirs communs, néanmoins le film s'il est déjà dans une configuration d'équilibre, reprend généralement sa configuration dès que l'exposition cesse.

L'invention correspond également à un procédé de dépôt de film mince nanométrique contenant des entités moléculaires sur un substrat à partir d'une solution liquide contenant au moins un tensio-actif à une concentration supérieure ou égale à la concentration micellaire critique (cmc) et des entités moléculaires. Le procédé est réalisé selon les modalités présentées précédemment, la solution pour la formation du film contenant dans ce cas les entités moléculaires.

Les entités moléculaires sont choisies selon le désir de l'utilisateur par exemple parmi les entités dont la taille n'excède pas quelques centaines d'ahgström et notamment parmi les molécules organiques, comme les protéines ou les entités biologiques, les nanoparticules inorganiques, les entités mixtes organiques-inorganiques ou un mélange de ces entités. De préférence ces entités seront solubles dans le solvant, i.e. leur solubilité sera supérieure ou égale à 10⁻⁴ mol.L⁻¹.

Il est souhaitable que les entités moléculaires considérées comme insolubles soient solubilisées dans la solution, aussi, il est recommandé que la solution contienne un tensio-actif de solubilisation. En relation avec ses connaissances générales, l'homme de l'art, notamment concernant les interactions hydrophiles et hydrophobes, est à même de déterminer le type de structure nécessaire pour cela. De préférence le tensio-actif de solubilisation n'aura que peu d'interactions avec le tensioactif formant le film.

Ainsi par exemple le tensioactif peut être choisi parmi ceux présentés ci-dessus et le tensioactif de solubilisation parmi les tensioactifs « orthogonaux », *i.e.* ne présentant pas d'affinité forte, comme les tensioactifs fluorés sont orthogonaux par rapport aux non fluorés. A titre d'exemple, des protéines membranaires insolubles dans l'eau en présence de tensioactif fluoré pourront être solubilisées par un tensioactif de solubilisation non ionique.

Il est probable que les entités moléculaires diffusent de la solution vers le film en raison de la différence de potentiel chimique de l'entité dans le film et en solution comme cela est postulé par Petkova et al. pour les protéines notamment dans Colloids and surfaces A, 2001, 190, 9-16 et par Benattar et al. dans Phys. Rev. Lett., 1999, 82, 26, 5297-5300.

Selon les inventeurs les molécules organiques sont notamment choisies parmi les protéines et les fibres de cellulose. S'agissant des nanoparticules inorganiques il est possible d'employer des structures telles que des nanotubes, par exemple de carbone, de silicium ou de carbure de silicium, des nanopoudres luminescentes, par exemple de silicium, des fullerènes, des particules de métal (argent, platine, palladium, or), des agrégats (or, silice...), des quantum dots (composées de semi-conducteur). Avantageusement il s'agira de nanoparticules inorganiques métalliques, comme l'or et l'argent, comportant un éventuel enrobage organique, comme des particules de platine enrobées, des nanoparticules organiques comme les nanotubes de carbone ou les fullerènes et des nanoparticules inorganiques semi-conductrices comme des nanoparticules de silicium.

Selon la quantité de solvant présente dans le film les entités moléculaires seront dans un environnement pouvant favoriser l'auto-organisation. Typiquement, plus la structure du film sera proche de celle d'un film noir de Newton plus les entités moléculaires auront tendance à s'auto-organiser. Ce phénomène est probablement du à une diminution des degrés de liberté des entités moléculaire qui adoptent une configuration d'énergie minimale correspondant à un structure qu'il est possible de qualifier généralement de réseau à deux dimensions selon son épaisseur. Lorsqu'un tensio-actif de solubilisation est utilisé il est également intégré dans ce « réseau ».

La solution pourra contenir en outre des sels afin de modifier la force ionique de la solution. La variation de la force ionique n'a généralement que peu de conséquences sur la structure du film, elle permet toutefois de modifier le potentiel chimique des espèces présentes dans le milieu comme celui des entités moléculaires.

La solution pourra contenir en outre des sels afin de modifier la force ionique de la solution. Selon les conditions expérimentales, la variation de la force ionique peut faire passer le film de l'état de film épais (non noir) à film noir commun, à film noir de Newton.

L'invention correspond également à un procédé d'analyse d'entités moléculaires disposées au sein d'un film déposé sur un substrat, ledit film étant obtenu à partir d'une solution liquide contenant au moins un tensio-actif et des entités moléculaires, ledit film étant obtenu selon les dispositions présentées, caractérisé en ce que l'on utilise un moyen d'analyse de surface sur le film.

Après dépôt du film sur le substrat selon les modalités présentées précédemment il est possible d'utiliser tout moyen d'analyse compatible avec le substrat, en ce sens que l'analyse est possible par cette technique sur une surface d'un tel substrat, afin de déterminer des données particulières notamment sur la structure des entités moléculaire ainsi que sur les interactions qu'elles développent entre elles. Des techniques d'analyse de surface, en général de l'échelle moléculaire à l'échelle atomique, telles que l'utilisation des rayons X en réflectivité et en diffraction, la résonnance par plasmons, la microscopie électronique, la microscopie à force atomique (AFM), sont applicables dans le cadre de l'invention. Il est ainsi possible de déterminer la structure d'une entité moléculaire comme une protéine par un tel procédé. Un tel procédé permet également de déterminer si des entités moléculaires s'organisent spontanément dans un film selon l'invention, en effet, une analyse du film déposé permet de détecter le degré d'organisation notamment grâce aux techniques précédemment citées et plus particulièrement avec l'AFM et la réflectivité des rayons X.

L'invention concerne également les substrats recouverts de film obtenus par l'un quelconque des procédés exposés ci-dessus ainsi que son utilisation dans tout domaine technique et notamment en électronique, dans l'optique, la catalyse, les capteurs, la biologie, la cosmétique.

Les dispositifs pour la mise en oeuvre des procédés précédemment décrits sont également inclus dans la présente invention. Ainsi l'invention concerne aussi les dispositifs pour le dépôt de film minces nanométriques sur un substrat à partir d'une solution liquide contenant au moins un tensio-actif, caractérisé en ce qu'il comporte :
- un moyen de formation (3) d'un film à partir de la surface de la solution,
- un moyen de déformation (4) de la surface du film formé à partir de la surface de la solution.

Le dispositif contient généralement une enceinte réactionnelle isolée du milieu extérieur, elle est de préférence étanche et transparente pour permettre un suivi optique du procédé. Les moyens de formation de film et de déformation de la surface correspondent à ceux défini précédemment, ils peuvent être confondus. Un moyen de drainage peut également être aménagé, il s'agit généralement de pores disposés dans le moyen de formation d'un film à partir de la surface de la solution, il peut aussi s'agir d'un dispositif à rayonnement infrarouge par exemple. Le dispositif peut en outre comporter des moyens d'analyse tels que définis plus haut.

L'invention est particulièrement avantageuse car elle permet notamment de déposer de manière efficace des films de nature complexe sur des surfaces de plusieurs centimètres carrés. De tels films peuvent contenir des entités moléculaires variées disposées dans un réseau dense et solide. Les interactions développées entre le film et la surface du substrat assurent une cohésion et une résistance importante au film.

Elle permet également de déposer une entité moléculaire d'une solution vers un substrat tout en l'isolant du milieu extérieur grâce au tensioactif. L'entité moléculaire en solution est protégée de l'interface solvant/milieu extérieur par le film de Langmuir qui se développe à la surface de la solution, puis, après dépôt, par exemple dans un NBF, par les parois de tensio-actif.

L'invention sera mieux comprise à la lumière des figures et exemples suivant qui l'illustrent de manière non limitative.
Figure 1 - Représentation schématique de différentes topographies de surface pour un substrat (2).
Figure 2 - Représentation schématique de différents dispositifs utilisables selon le procédé.
Figure 3 - Illustration de la formation d'un film à l'aide d'un dispositif de formation et dépôt de film.
Figure 4 - Illustration de l'étape de dépôt d'un film.
Figure 5 - Images obtenues par AFM de la surface d'un NBF après dépôt sur un substrat (2).
Figure 6 - Représentation schématique de la préparation de film comportant des entités moléculaires.
Figure 7 - Images obtenues par AFM de la surface d'un NBF après dépôt sur un substrat (environ 250 x 250 nm), le film contenant des particules d'or, l'image en (a) correspond à une vue au dessus de la surface recouverte par le film et en (b) à un profil correspondant à la marque sur la figure (a).
Figure 8 - Cartographie obtenues par AFM de la surface d'un NBF après dépôt sur un substrat (surface de 15,4 x 15,4 µm environ), le film contenant des particules de silicium.

Une solution (1) de tensioactif peut-être préparée à partir à partir de C₁₂E₆ (l'éther d'hexaéthylènemonododécyl glycol) directement disponible dans le commerce chez SIGMA (Steinheim, Allemagne) sans purification supplémentaire. Un tel composé est connu pour former des films noirs de bonne qualité dans des conditions relativement douces.

Le solvant choisi est généralement l'eau, il est souhaitable d'utiliser de l'eau particulièrement pure souvent disponible dans le commerce. Le tensioactif peut être présent dans une large gamme de concentration supérieur à la cmc, ainsi une concentration de 0,5 mg.ml⁻¹, ce qui correspond approximativement à quinze fois la cmc dans les CNTP, permet d'obtenir des NBF stables et de surface importante. La température est comprise généralement entre 22 et 25°C et la solution est mélangée par un agitateur magnétique pour obtenir une solution uniforme, incolore. La solution peut également être filtrée avant d'être utilisée pour éliminer d'éventuelles impuretés.

Le substrat (2) peut être constitué de silicium, il s'agit généralement d'un *wafer,* typiquement utilisé dans l'industrie électronique. Ainsi un substrat de silicium, de type n, dont la surface sur laquelle il est envisagé de déposer le film peut notamment être du Si (111). Le substrat peut bien entendu avoir subit un dopage particulier dans la mesure ou il serait souhaitable de lui conférer des propriétés particulière, notamment électronique (dopage de type n ou p avec différents éléments). Le substrat a un diamètre d'environ 5 cm.

La surface est avantageusement nettoyée, pour cela on peut employer une solution « piranha ». Elle est constituée d'acide sulfurique et de peroxyde à 33 % d'hydrogène (par exemple dans un rapport de l'ordre de 3:1).

Il est par ailleurs souhaitable de faire subir un traitement à la surface pour la rendre hydrophobe, ainsi l'utilisation d'une solution de NH₄F aqueux (40%) pour environ 20 minutes. Un rinçage à l'eau pure est ensuite effectué puis la surface est séchée à l'argon. Après ce traitement la surface est terminée H.

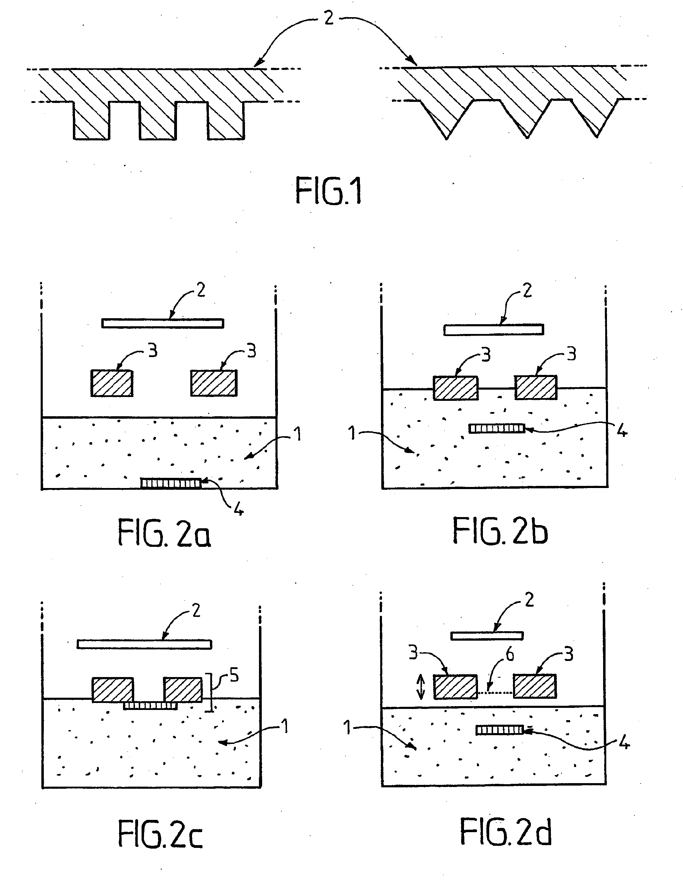

Par ailleurs la surface peut être ouvragée de telle sorte qu'elle présente une topographie particulière et ainsi être crénelée, ondulée ou encore garnie d'aspérités comme illustré à la figure 1. Selon le type de méthode employée les reliefs en surface peuvent être d'échelle macroscopique ou inférieur, les techniques d'abrasions connus dans le domaine des matériaux peuvent être employées. Au niveau microscopique et inférieur il est connu que l'utilisation de masques, d'oxydant ou encore de résines photosensibles permet d'obtenir des reliefs de surfaces.

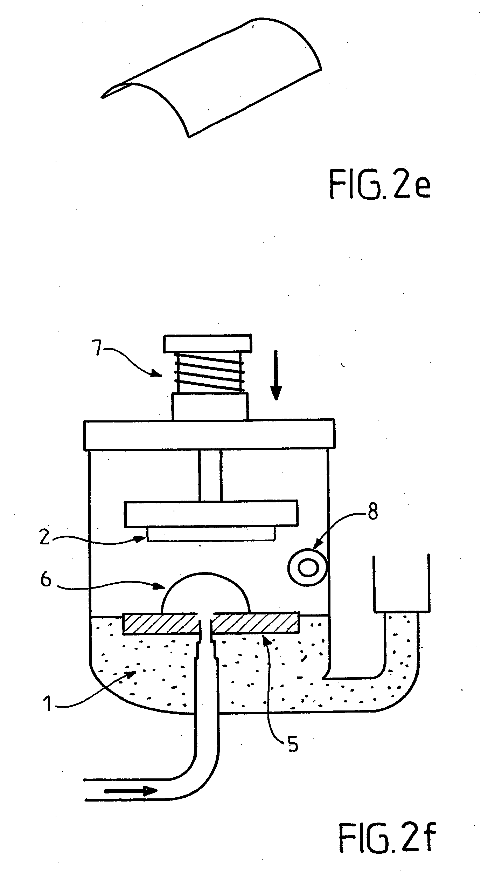

Le procédé est notamment mis en oeuvre à l'aide d'un dispositif comprenant un moyen (3) de formation de film à partir de la surface de la solution ainsi qu'un moyen (4) de déformation de la surface du film formé à partir de la surface de la solution, confondus (5) ou non. De tels dispositifs sont illustrés figure 2.

Sur la figure 2a est représentée une enceinte réactionnelle comportant le dispositif, dans cette configuration le moyen (3) de formation du film n'est pas au contact de la solution (1), il peut être mis en mouvement pour établir un contact avec la solution et permettre la formation d'un film. Le moyen est généralement constitué d'un matériau compatible avec la solution et notamment hydrophile comme le verre fritté (borosilicate). La solution peut également être mise en translation. Une fois le film formé le moyen de déformation de sa surface peut être utilisé, sur la figure il a été placé dans la partie la plus extrême de l'enceinte, il peut bien entendu être disposé ailleurs, comme c'est le cas sur la figure 2b, dans la mesure où il assure toujours la déformation du film. Sur la figure 2b le moyen (3) est au contact de la solution, sur la figure 2c les moyens (3) et (4) sont confondus en un unique moyen (5) de formation de film et de déformation de sa surface, la figure 2d illustre un exemple de formation du film (6) à partir de la surface de la solution.

Le moyen (4) de déformation est généralement constitué d'une entrée de gaz. L'utilisation d'un gaz est particulièrement appréciable puisqu'elle permet notamment d'obtenir à la fois un film à partir de la surface de la solution tout en déformant sa surface pour faciliter le contact avec le substrat (2). L'utilisation d'un cadre de structure particulière permet également d'obtenir des films dont la surface n'est pas plane et présente une déformation caractéristique. Ainsi un cadre (5), illustré à la figure 2e, dont la forme est sensiblement proche de celle d'un demi cylindre permet de former des films courbes.

L'utilisation d'un dispositif tel qu'illustré à la figure 2f est particulièrement recommandée. La solution est placée dans une enceinte réactionnelle de telle sorte qu'elle affleure à la surface d'une plaque (5) poreuse en verre fritté, dans laquelle est aménagée une entrée de gaz. L'injection d'un gaz, d'une composition généralement sensiblement identique à celle de l'atmosphère dans l'enceinte, permet la formation d'une bulle à la surface de la solution et les pores garnissant la plaque assurent un drainage efficace de l'eau contenu dans le film (6). L'injection peut se faire de manière contrôlée et le diamètre de la bulle est ainsi parfaitement déterminé. Des moyens d'analyse peuvent en outre être ajoutés au dispositif afin de suivre l'évolution du film par réflectivité optique ou encore par interférométrie.

L'atmosphère dans l'enceinte est saturée par le solvant.

Aucun sel supplémentaire n'a été ajouté dans la solution, dans le cas d'autres tensioactifs il aurait bien entendu possible d'ajouter des sels à la solution.

Dans le cas présent le drainage est de l'ordre d'une quinzaine de minutes pour un film sous forme d'une bulle d'environ 5 cm de diamètre pour l'obtention d'un NBF.

L'étape de mise en contact du film formé à partir de la solution avec le substrat peut être réalisée selon différentes modalités. Ainsi un mouvement de translation peut-être donné aussi bien au film qu'au substrat, la surface du film ou du substrat, lorsque cela est possible, peut également être déformée.

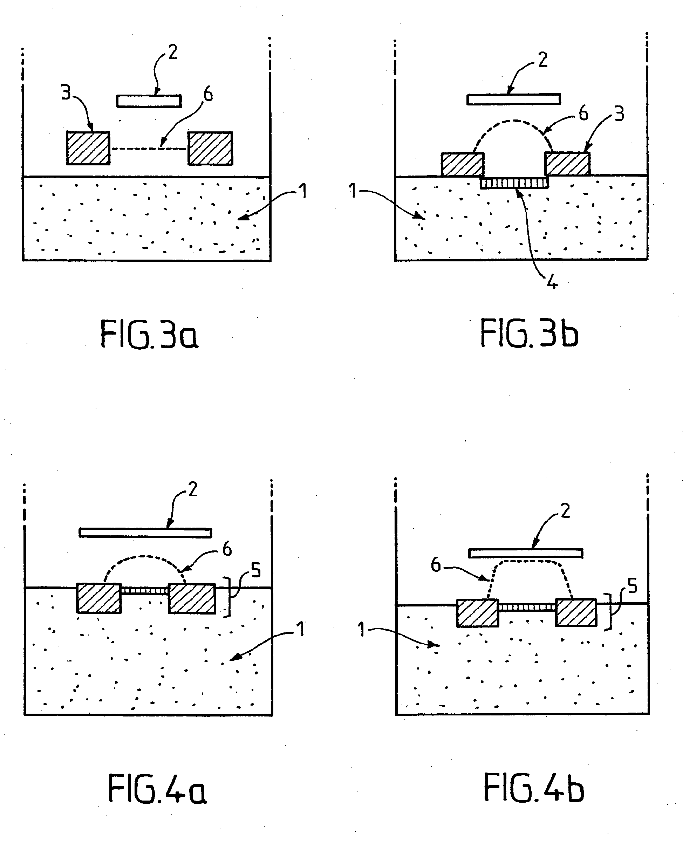

Sur la figure 3 sont illustrés différents modes de mise en contact. Ainsi sur la figure 3a la surface du film (6) n'est pas déformée et le contact est assuré par un déplacement relatif du substrat (2) et de la surface du film (6), il est souhaitable dans ce cas que les tailles respectives du substrat (2) et du moyen (3) soient adaptées. La figure 3b illustre la déformation de la surface du film (6) à l'aide d'un moyen (4) de déformation, le contact avec le substrat (2) peut être effectué dans ce cas par simple déformation mais il est également possible d'assurer une translation du film (6) ou du substrat (2).

Le dispositif illustré à la figure 2f correspond à un mode de réalisation particulièrement apprécié par les inventeurs. Il y a lieu de remarquer dans ce cas que le substrat (2) est disposé sur un moyen de translation (7) qui est généralement constitué par un vérin et un support sur lequel est placé le substrat.

Il est préférable d'attendre que le film (6) soit sous forme de NBF avant le dépôt. Un étalonnage peut-être réalisé pour définir le temps minimum nécessaire à la formation d'un film de type NBC, notamment dans les cas où l'utilisateur ne souhaite pas réaliser de contrôle, tel qu'optique, en direct du procédé.

Un moyen d'analyse (8) peut être inséré dans le dispositif, il s'agit généralement d'un appareil photographique ou d'une caméra qui permettent de suivre en direct l'évolution du film.

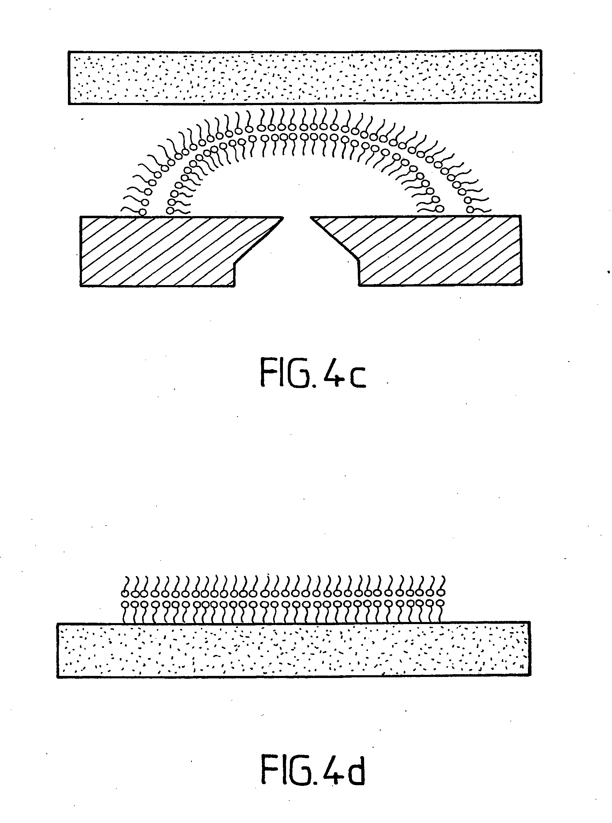

Le dépôt est généralement rapide : dès la mise en contact de la surface du film (6) et du substrat (2) le film se déforme pour épouser la surface du substrat, il est possible d'observer une transition durant laquelle un film grossièrement cylindrique est établi tel qu'illustré aux figures 4a et b. Le film se dépose spontanément après s'être séparé du moyen (3) de formation ou encore de la surface de la solution. Les figures 4c et d illustrent de manière plus précise le dépôt, sur la figure 4c sont notamment représentées les molécules de tensioactif constituant le film (6) ainsi que le substrat (2) et le moyen (5) de formation de film et déformation de sa surface. Le film est sous la forme d'une bulle qui est mise au contact du substrat (2). Après le dépôt, un film constitué de tensioactif est disposé sur la surface du substrat (2) comme illustré à la figure 4d, à l'échelle macroscopique l'expérimentateur constatera un phénomène qualifiable « d'éclatement » de la bulle lorsque le film est déposé.

Après le dépôt il est possible d'effectuer une analyse de la surface notamment avec un AFM, un TEM (microscope à transmission d'électrons), un SEM (microscope électronique à balayage) ou encore à l'aide de rayons X. L'utilisation des rayons X permet d'obtenir des informations structurales le long d'un axe perpendiculaire au plan du film. La microscopie à force atomique ou la microscopie électronique délivre des informations sur la structure topographique du film déposé.

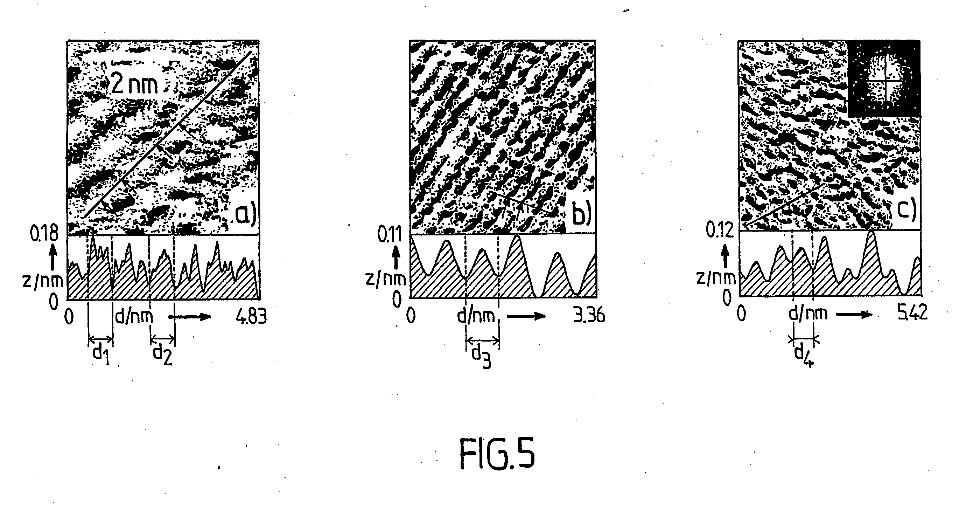

Sur la figure 5 sont représentées des images topographiques obtenues par AFM (Seiko Instruments, Chiba, Japan, SPA300HV) équipé d'une pointe de platine recouverte de silicium, celle-ci est appliquées avec une force de 0,03-0,08 N.m-1, le rayon de la pointe est approximativement de 32 nm. L'AFM est utilisée en mode contact. Les figures 5a à 5c correspondent respectivement à des analyses sur des surfaces de 4x4, 8x8 et 12x12 nm².

Les données montrent que le NBF déposé conserve l'ordre qui lui est typiquement associé avant d'être déposé c'est-à-dire un ordre à grande distance.

L'introduction d'entités moléculaires dans le film est généralement réalisée en introduisant les entités désirées dans la solution comme cela a été montré dans la littérature notamment pour des protéines membranaires. Les conditions opératoires applicables dans le cas des protéines membranaires sont utilisables dans le cadre du présent procédé. Après le dépôt du film les protéines présentent un agencement caractéristique sensiblement identique à celui qu'elles adoptent avant le dépôt. Les entités moléculaires présentent dans le film forment un véritable réseau essentiellement bidimensionnel.

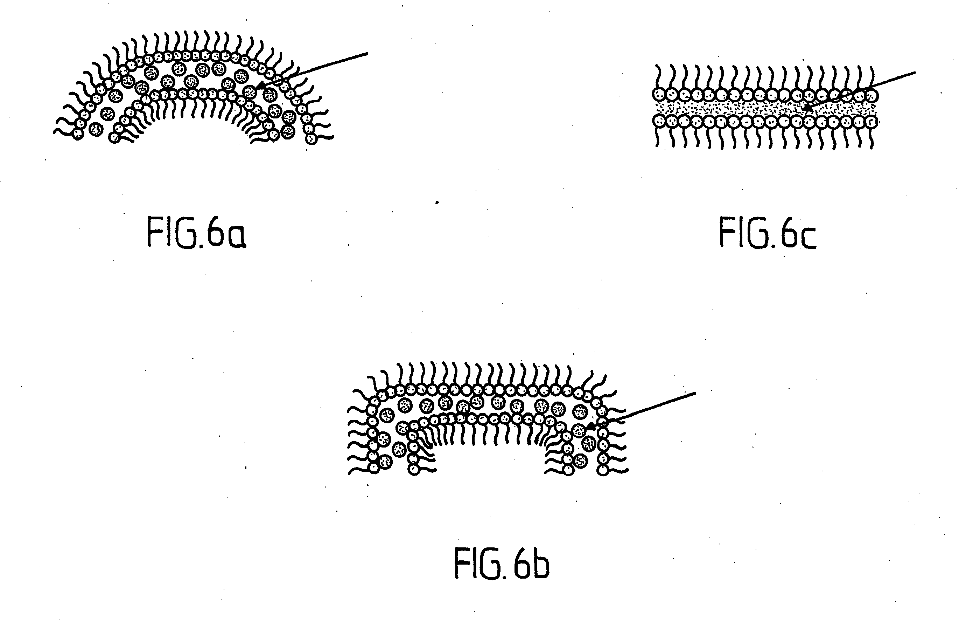

Le mécanisme de formation du film est le même qu'en absence d'entités moléculaires. Ainsi qu'illustré sur la figure 6, sur laquelle une flèche indique les entités moléculaires, il y a tout d'abord formation d'une bulle contenant des entités moléculaires (figure 6a), drainage et approche du substrat, adhésion de la bulle au substrat, formation subséquente d'un cylindre (figure 6b), puis dépôt du film contenant des entités moléculaires (figure 6c).

Afin d'illustrer cet aspect de l'invention ci-après sont présentés des exemples d'introduction de nanoparticules métalliques (or, argent), de nanoparticules métalliques enrobées (coeur de platine), de nanoparticules de semi-conducteur (silicium), de nanotubes de carbone et de fullerènes. Les films sans particules ont été réalisés dans les mêmes conditions afin d'avoir un témoin comparatif.

Les nanoparticules de silicium employées avaient un diamètre compris entre 5 et 16 nm, elles sont similaires à celle obtenues par le protocole décrit par Lacour et al. dans Physica E 38 (2007) 11-15. Les nanoparticules d'or et d'argent d'un diamètre compris entre 5-10 nm ont été acquises auprès de BBInternational®. D'autres nanoparticules d'argent ont été employées, elles ont été synthétisées en effectuant une réduction de sels d'argent par irradiation UV ou par réaction chimique avec un réducteur fort (NaBH₄), le diamètre moyen n'ayant pas été caractérisé précisément mais se situant entre 5 et 20 nm. Ces différentes nanoparticules sont hydrophiles, elles ont été solubilisées dans l'eau. Les nanoparticules de silicium ont été également solubilisées dans l'éthanol puis additionnés à une solution aqueuse de surfactants fluorés non ioniques C₆F₁₃SOTHAM à 0,5 g.l⁻¹, l'éthanol ayant ensuite été évaporé de la solution en quasi-totalité. Les particules étant hydrophiles, il est également possible de les solubiliser directement dans une solution aqueuse de surfactants fluorés non ioniques C₆F₁₃SOTHAM à 0,5 g.l⁻¹, par en présence d'ultrasons.

Les nanoparticules de platine qui ont été employées sont celles décrites dans la thèse (Films de Langmuir-Blodgett à base de nanoparticules de platine à enrobage organique modifié : élaboration, caractérisation et comportement électrochimique, présentée par Sara Cavaliere-Jaricot le 10 février 2006, Université de Versailles Saint-Quentin-en-Yvelines). Elles ont été solubilisées dans une solution aqueuse de tensio-actifs fluorés C₆F₁₃SOTHAM.

Le buckminsterfullèrene, fullerène en C60, a été acquis auprès de SIGMA, les nanotubes de carbone mono-paroi (SWNT) d'un diamètre moyen de 1 nm et d'une longueur moyenne de 200 nmont été acquis auprès de CNI Carbon Nanotechnologies Inc., 16200 Park Row, Houston TX 77084, USA. Les fullerènes et nanotubes de carbone sont hydrophobes, et ont été solubilisés avec du SDBS pour les nanotubes et du triton X 100 ® pour les fullerènes. Les fullerènes, ont tout d'abord été dispersés dans le toluène avant d'être dispersés dans une solution aqueuse de tensio-actif.

Les exemples présentés ont été réalisés avec de l'eau à titre de solvant, des résultats similaires sont obtenus avec un mélange eau/éthanol 99 :1 en volume. Les tensio-actifs, et leur concentration, employés selon les entités moléculaires sont présentés dans le tableau 1.

| **PARTICULE** | **TENSIO-ACTIF** | **CONCENTRATION EN TENSIO-ACTIF** |
|---|---|---|
| Or | C₆F₁₃SOTHAM | 0,5, 0,9 et 1 g.l⁻¹ |
| | C12E6 | 0,5 et 1 g.l⁻¹ |
| Argent commercial | C₁₂E₆ | 1 g.l⁻¹ |
| Argent synthétisé | C₆F₁₃SOTHAM | 0,5 ou 1 g.l⁻¹ |
| | C₁₂E₆ | 0,5 g.l⁻¹ |
| Silicium | C₁₂E₆ | 1, 0,08, 0,16 et 0,4 g.l⁻¹ |
| | C₆F₁₃SOTHAM | 0,5, 1 et 6,4 g.l⁻¹ |
| Platine | C₆F₁₃SOTHAM | 0,5 g.l⁻¹ |
| Nanotubes | SDBS | 2,4 g.l⁻¹, 5 fois la CMC |
| Buckminsterfullèrene | Triton X 100® | 1,25 g.l⁻¹, 10 fois la CMC |

Les solutions ont été préparées en mélangeant les particules au solvant puis en ajoutant le tensio-actif ou par addition des nanoparticules à la solution de solvant contenant le tensio-actif, elles ont été homogénéisées par application brève d'ultrasons.

Le film a été préparé grâce à différents dispositifs dont le principe de fonctionnement est similaire à celui illustré à la figure 4a. Alternativement un matériau poreux imprégné de solution ou un papier filtre (renouvelé à chaque expérience après chaque expérience) sur un entonnoir Büchner ou dans un cristallisoir imprégné de solution ont été employés avec succès. L'avantage de l'entonnoir Büchner est sa facilité à être nettoyé par rapport au poreux. En effet, les nanoparticules s'insèrent dans les pores du poreux et sont donc très difficiles à nettoyer.

La création de la bulle destinées à former le film a été faite soit à l'aide d'une seringue remplie d'air, à vitesse constante à l'aide d'un pousse-seringue ; soit à partir d'une pipette plastique (jetable) trempée dans un peu de solution. Les deux méthodes ont conduit au même type de film après analyse, le dépôt du film ayant été fait au même stade de drainage de la bulle.

Le dépôt a été effectué lorsque le film est très mince : après formation de la bulle un changement de couleur est observé et lorsque le film est d'apparence gris ou noir à l'oeil nu il peut être déposé. Dans ces conditions son épaisseur est inférieure à 50 nm après analyse, avec une bulle recouvrant une surface de 1 à 5 cm². L'atmosphère employée était saturée en solvant. La présence de nanoparticules n'influe pas de manière visible

A titre de substrat des plaquettes de silicium traitées avec du NH₄F («wet chemical etching » pour qu'elles soient hydrophobes), ou bien des plaquettes silanisées de silicium ou de verre (greffage de chaîne alkyle sur la surface d'oxyde) ont été employées. Les plaquettes de silicium utilisées (d'orientation 111 pour la gravure au NH₄F, 111 ou 100 pour la silanisation) ont une épaisseur d'environ 5 cm.et une surface de 12x24 mm².

Les plaquettes de silicium ou les plaques de verre ont été dans un premier temps nettoyées à l'acétone bouillante, puis à l'eau pure (milliQ®), au piranha (mélange d'acide sulfurique et d'eau oxygénée) puis abondamment rincées à l'eau pure (milliQ®) et éventuellement séchées à l'aide d'un flux d'azote en cas de silanisation).

Le traitement au NH₄F a été réalisé avec une solution aqueuse à 40 % dans l'eau, commercialisée par Sigma Aldrich®. La silanisation des plaquettes, a été réalisée avec de l'octadécyltrichlorosilane (Sigma Aldrich®) à 5 mM dans un mélange chloroforme 30 % en volume et hexadécane ou toluène 70 % en volume.

Les exemples ont été réalisés à une température comprise entre 22 et 25°C.

Les particules d'or sont synthétisées par le fabricant à partir d'une solution aqueuse de chlorure d'or à 0,01 % en masse, les calculs de concentration en particules sont donc basés sur des valeurs dérivées. Des solutions de particules d'or ont été préparées par dilution de la solution achetée aux concentrations suivantes : 5.10⁻⁵, 10⁻⁵, 10⁻⁶, 10⁻⁷, 10⁻⁸, 10⁻⁹ g.ml⁻¹.

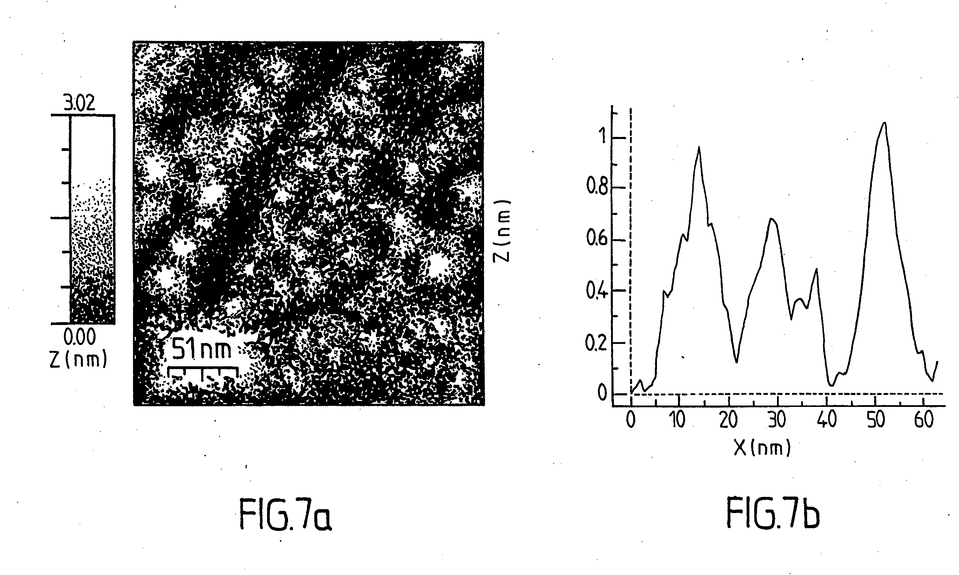

La présence de nanoparticules dans le film a pu être observée à l'AFM et par réflectivité des rayons X. Sur la figure 7a est représentée une image AFM telle qu'elle peut être obtenue. L'analyse profilométrique, illustrée à la figure 7b à partir d'une coupe sur la figure 7a (trait), montre une organisation à courte distance des particules, la distribution en monocouche des particules est largement observée.

Des solutions contenant des particules d'argent commerciale ont été préparées par dilutions aux concentrations suivantes : 5.10⁻⁵ mol. l⁻¹, 10⁻⁴ mol. l⁻¹ ; les particules synthétisées ont été préparées à partir d'une solution de AgNO₃ à une concentration de 0,1 ou 0,4 g.l⁻¹.

La présence de nanoparticules au sein du film a pu être confirmée grâce à l'AFM et par réflectivité des rayons X ainsi que cela a été fait pour les particules d'or.

Les particules de platine ont été introduites dans la solution à la concentration suivante : 0,5 g.l⁻¹.

La présence de nanoparticules dans le film a pu être confirmée grâce à l'AFM et par réflectivité des rayons X ainsi que cela a été fait pour les particules d'or et d'argent.

Les particules de silicium ont été introduites dans les différentes solutions aux concentrations suivantes : 0,05 g.l⁻¹, 0,1 g.l⁻¹, 0,25 g.l⁻¹.

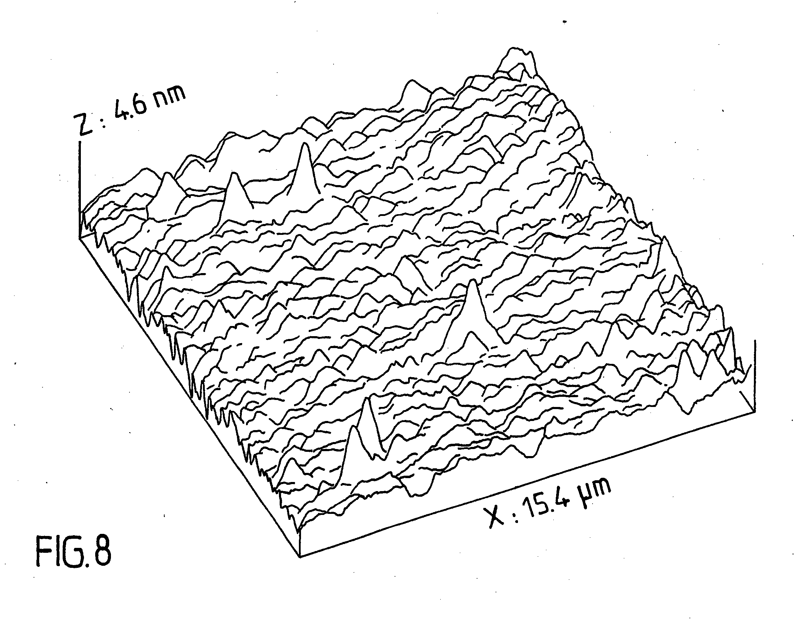

La présence de nanoparticules au sein du film a pu être confirmée grâce à l'AFM et par réflectivité des rayons X ainsi que cela a été fait pour les particules d'or, d'argent et de platine. Des nanoparticules individuelles insérées dans le film, dont la hauteur est attendue, lorsque la concentration en silicium est faible (0,1 g.l⁻¹) ont également été observées. Sur la figure 8 est représentée une cartographie obtenue par AFM pour une concentration de 0,1 g.l⁻¹. On peut constater la répartition isolée des particules qui correspondent aux pices les plus hauts. L'isolation des particules dans le film permet d'étudier leurs propriétés.

Les nanotubes de carbone ont été introduits dans les différentes solutions aux concentrations suivantes : 0,1 g.l⁻¹.

Le buckminsterfullèrene a été introduit dans la solution aux concentrations suivantes : de 0,1 à 0,25 g.l⁻¹.

La formation de film a également été observée pour ces entités.

Ainsi que cela apparait ci-dessus il est possible de déposer de manière aisée des films d'épaisseur nanométrique contenant des entités moléculaire sur différents types de substrat. Il est en outre également possible d'obtenir des entités présentant une organisation au sein du film ainsi que cela ressort des exemples précédents.

## Revendications

1. Procédé de dépôt de film mince nanométrique sur un substrat à partir d'une solution liquide contenant au moins un tensioactif à une concentration supérieure ou égale à la concentration micellaire critique (cmc), **caractérisé en ce qu'**il comporte les étapes suivantes :
- Formation d'un film à partir de la solution à l'aide d'un moyen de formation de film,
- Mise en contact du film formé à partir de la solution avec le substrat,
- Dépôt du film sur le substrat.

2. Procédé selon la revendication 1, **caractérisé en ce que** le tensioactif est choisi parmi les tensioactifs anioniques.

3. Procédé selon la revendication 2, **caractérisé en ce que** le tensioactif est choisi parmi les composés de formule (III) suivante :
R₆-A⁻, Cat⁺ (III)
dans laquelle :
- R6 représente un groupe aryle ou alkyle en C₁-C₂₀, de préférence en C₁-C₁₄,
- A⁻ est anion ou un polyanion choisi notamment parmi les sulfonates, les sulfates, les phosphates, les carboxylates, les sulfosuccinates,
- Cat⁺ est un contre ion cationique, de préférence choisi parmi l'ion ammonium (NH₄⁺), les ammoniums quaternaires tels que tetrabutylammonium, et les cations alcalins tels que Na⁺, Li⁺ et K⁺.

4. Procédé selon les revendications 1, 2 ou 3 **caractérisé en ce que** le tensioactif est choisi parmi le dodécylsulfate, le dodécylbenènesulfonate, le palmitate, le stéarate, le myristate, le di(2-éthylhexyl) sulfosuccinate, le méthylbenzène sulfonate et l'éthylbenzène sulfonate, le dipalmitoyl phosphatidylglycerol, en présence d'un cation alcalin.

5. Procédé selon la revendication 1 **caractérisé, en ce que** le tensioactif est choisi parmi les tensioactifs cationiques.

6. Procédé selon la revendication 5 **caractérisé en ce que** le tensioactif est choisi parmi les composés de formule (IV) suivante :
(R₇)₄-N⁺, An⁻ (IV)
dans laquelle :
- les groupes R₇, identiques ou différents, représentent une chaîne aliphatique, par exemple une chaîne alkyle en C₁-C₂₀, de préférence en C₁-C₁₄,
- An⁻ est un contre ion anionique choisi notamment parmi les dérivés du bore tels que le tetrafluoroborate ou les ions halogénures tels que F⁻, Br⁻, I⁻ ou Cl⁻.

7. Procédé selon la revendication 6, **caractérisé en ce que** R₇ est un groupe méthyle, éthyle, propyle, butyle ou tetradécyle.

8. Procédé selon la revendication 6, **caractérisé en ce que** le tensioactif est choisi parmi le bromure de tetradécyltriméthyle ammonium (TTAB ou CTAB), les halogénures d'alkylpyridinium portant une chaîne aliphatique en C₁-C₁₈, les halogénures d'alkylammonium comme le bromure d'hexadécyltriméthylammonium ou le bromure de dodécyltriméthylammonium ou bien encore des phospholipides par exemple le sel de N-[1-(2,3-dioleyloxy)propyl]trimethylammonium.

9. Procédé selon la revendication 1, **caractérisé en ce que** le tensioactif est choisi parmi les tensioactifs zwittérioniques.

10. Procédé selon la revendication 1 ou 9, **caractérisé en ce que** le tensioactif est choisi parmi le N,N diméthyldodécylammoniumbutanate de sodium, le diméthyldodécylammonium propanate de sodium et les acides aminés, le dodecylphosphocholine (C12PC), les phospholipides telles que dimyristoyl phosphatidylcholine, dipalmitoyl phosphatidylcholine, dioleoyl phosphatidylcholine, dimyristoyl phosphatidylethanolamine, dipalmitoyl phosphatidylethanolamine, dioleoyl phosphatidylethanolamine.

11. Procédé selon la revendication 1, **caractérisé en ce que** le tensioactif est choisis parmi les composés de formule (V) suivante :
Z⁻-R₈-Z⁺ (V)
dans laquelle :
- R₈ représente une chaîne alkyle en C₁-C₂₀, de préférence en C₁-C₁₄,
- Z⁻ représente une fonction chargée négativement portée par R₈, de préférence choisie parmi sulfate et carboxylate,
- Z⁺ représente une fonction chargée positivement, de préférence un ammonium.

12. Procédé selon la revendication 1, **caractérisé en ce que** le tensioactif est choisi parmi les tensioactifs amphotères.

13. Procédé selon la revendication 12, **caractérisé en ce que** le tensioactif est choisi parmi les acides aminés et les savons.

14. Procédé selon la revendication 1, **caractérisé en ce que** le tensioactif est choisi parmi les tensioactifs neutres.

15. Procédé selon la revendication 14, **caractérisé en ce que** le tensioactif est choisi parmi les polyéthers, les tensioactifs polyéthoxylés, les dérivés de polyethylèneglycol et les polyether, les tensioactifs de type CᵢEⱼ dont le lauryléther de polyéthylèneglycol tel que POE23 ou Brij ® 35, C₁₂E₂₃, le Tween 20®, le Tween 80®, le Triton X100®, le Triton X100-R®, les polyols, les alkylates de glucose tels que par exemple l'hexanate de glucose.

16. Procédé selon l'un quelconque des revendications précédentes, **caractérisé en ce que** le solvant est polaire protique.

17. Procédé selon la revendication 16, **caractérisé en ce que** le solvant est choisi parmi l'eau, le toluène, l'acide acétique, le méthanol, l'éthanol, l'acétonitrile, la diméthylformamide ou leurs mélanges.

18. Procédé selon l'une quelconque des revendications précédentes, **caractérisé en ce que** la concentration en tensioactif est comprise entre la cmc et cent fois la valeur de la cmc.

19. Procédé selon l'une quelconque des revendications précédentes, **caractérisé en ce que** le procédé est réalisé sous une atmosphère saturé en solvant de solution.

20. Procédé selon l'une quelconque des revendications précédentes, **caractérisé en ce que** le substrat est tel que l'angle de contact θ du solvant sur le substrat soit supérieur ou égal à 90°.

21. Procédé selon les revendications 1 et 20, **caractérisé en ce que** le substrat est constitué d'un métal, d'un alliage métallique ou d'un semi-conducteur.

22. Procédé selon les revendications 1 et 20, **caractérisé en ce que** le substrat est un polymère organique ou du matériel biologique.

23. Procédé selon les revendications 20 à 22, **caractérisé en ce que** le substrat est plan à l'échelle macroscopique.

24. Procédé selon la revendication 1, **caractérisé en ce que** l'étape de formation du film est réalisée à l'aide de l'action mécanique d'un moyen de formation de film qui traverse la surface de la solution.

25. Procédé selon la revendication 24, **caractérisé en ce que** le moyen de formation de film est constitué par un support solide au sein duquel est aménagé un espace vide.

26. Procédé selon la revendication 24, **caractérisé en ce que** le moyen permet la formation de films non plans.

27. Procédé selon la revendication 24, **caractérisé en ce que** le moyen est un gaz.

28. Procédé selon la revendication 1, **caractérisé en ce que** le film est déposé lorsqu'il est sous forme de film noir commun ou de film noir de Newton.

29. Procédé selon l'une quelconque des revendications précédentes, **caractérisé en ce que** la solution comporte des entités moléculaires.

30. Procédé selon la revendication 29 **caractérisé en ce que** les entités moléculaires sont choisies parmi les entités dont la taille n'excède pas une centaine d'angström.

31. Procédé selon la revendication 30, **caractérisé en ce que** les entités moléculaires sont des molécules organiques et notamment des protéines ou des fibres de cellulose.

32. Procédé selon la revendication 30, **caractérisé en ce que** les entités moléculaires sont des nanoparticules organiques, des nanoparticules inorganiques semi-conductrices, métalliques ou métalliques à enrobage organique.

33. Procédé selon les revendications 29 à 32, **caractérisé en ce qu'**il comporte en outre une étape d'analyse d'entités moléculaires disposées au sein d'un film déposé sur un substrat

34. Substrat recouvert d'un film obtenu par un procédé selon l'une quelconque des revendications 1 à 32.

35. Dispositif pour le dépôt de film minces nanométriques sur un substrat à partir d'une solution liquide contenant au moins un tensio-actif, selon l'une quelconque des revendications 1 à 33, **caractérisé en ce qu'**il comporte :
- un moyen de formation (3) d'un film à partir de la surface de la solution,
- un moyen de déformation (4) de la surface du film formé à partir de la surface de la solution.

36. Dispositif selon la revendication 35, **caractérisé en ce qu'**un moyen de drainage est aménagé dans le moyen de formation (3).

## Patentansprüche

1. Verfahren zum Aufbringen eines nanometrischen Dünnfilms auf ein Substrat, ausgehend von einer flüssigen Lösung, die mindestens ein Tensid enthält, dessen Konzentration größer oder gleich der kritischen Mizellbildungskonzentration (cmc) ist, **dadurch gekennzeichnet, dass** es die folgenden Schritte aufweist:
- Bilden eines Films ausgehend von der Lösung, mit Hilfe eines Filmbildungsmittels,
- Inkontaktbringen des Films, der ausgehend von der Lösung gebildet wurde, mit dem Substrat,
- Aufbringen des Films auf das Substrat.

2. Verfahren nach Anspruch 1, **dadurch gekennzeichnet, dass** das Tensid aus den anionischen Tensiden ausgewählt ist.

3. Verfahren nach Anspruch 2, **dadurch gekennzeichnet, dass** das Tensid aus den Verbindungen der folgenden Formel (III) ausgewählt ist:
R₆-A⁻, Cat⁺ (III)
wobei:
- R6 für eine Arylgruppe oder eine C₁-C₂₀-, vorzugsweise eine C₁-C₁₄- Alkylgruppe steht,
- A⁻ ein Anion oder ein Polyanion ist, welches insbesondere aus den Sulfonaten, den Sulfaten, den Phosphaten, den Carboxylaten, den Sulfobernsteinsäureestern ausgewählt ist,
- Cat⁺ ein kationisches Gegenion ist, welches vorzugsweise aus dem Ammoniumion (NH₄⁺), den quartären Ammoniumverbindungen, wie etwa Tetrabutylammonium, und aus den Alkalikationen wie etwa Na⁺, Li⁺ und K⁺ ausgewählt ist.

4. Verfahren nach den Ansprüchen 1, 2 oder 3, **dadurch gekennzeichnet, dass** das Tensid aus Dodecylsulfat, Dodecylbenzolsulfonat, Palmitat, Stearat, Myristat, Di(2-ethylhexyl)sulfosuccinat, Methylbenzolsulfonat und Ethylbenzolsulfonat, Dipalmitoylphosphatidylglycerin, in Gegenwart eines Alkalikations, ausgewählt ist.

5. Verfahren nach Anspruch 1, **dadurch gekennzeichnet, dass** das Tensid aus den kationischen Tensiden ausgewählt ist.

6. Verfahren nach Anspruch 5, **dadurch gekennzeichnet, dass** das Tensid aus den Verbindungen der folgenden Formel (IV) ausgewählt ist:
(R₇)₄-N⁺, An⁻ (IV)
wobei:
- die Gruppen R₇, die identisch oder verschiedenartig sind, für eine aliphatische Kette stehen, beispielsweise für eine C₁-C₂₀-, vorzugsweise eine C₁-C₁₄-Alkylkette,
- An⁻ ein anionisches Gegenion ist, das insbesondere aus den Borderivaten wie etwa Tetrafluorborat oder aus den Halogenidionen wie etwa F⁻, Br⁻, I⁻ oder Cl⁻ ausgewählt ist.

7. Verfahren nach Anspruch 6, **dadurch gekennzeichnet, dass** R₇ eine Methyl-, Ethyl-, Propyl-, Butyl- oder Tetradecylgruppe ist.

8. Verfahren nach Anspruch 6, **dadurch gekennzeichnet, dass** das Tensid aus Tetradecyltrimethylammoniumbromid (TTAB oder CTAB), den Alkylpyridiniumhalogeniden, welche mit einer aliphatischen C₁-C₁₈-Kette versehen sind, den Alkylammoniumhalogeniden wie Hexadecyltrimethylammoniumbromid oder Dodecyltrimethylammoniumbromid oder auch aus Phopholipiden, beispielsweise dem Salz von N-[1-(2,3-Dioleyloxy)propyl]trimethylammonium, ausgewählt ist.

9. Verfahren nach Anspruch 1, **dadurch gekennzeichnet, dass** das Tensid aus den zwitterionischen Tensiden ausgewählt ist.

10. Verfahren nach Anspruch 1 oder 9, **dadurch gekennzeichnet, dass** das Tensid aus Natrium-N,N-dimethyldodecylammoniumbutanat, Natriumdimethyldodecylammoniumpropanat und den Aminosäuren, Dodecylphosphocholin (C12PC), den Phospholipiden wie etwa Dimyristoylphosphatidylcholin, Dipalmitoylphosphatidylcholin, Dioleylphosphatidylcholin, Dimyristoylphosphatidylethanolamin, Dipalmitoylphosphatidylethanol, Dioleoylphosphatidylethanolamin, ausgewählt ist.

11. Verfahren nach Anspruch 1, **dadurch gekennzeichnet, dass** das Tensid aus den Verbindungen der folgenden Formel (V) ausgewählt ist:
Z⁻-R₈-Z⁺ (V)
wobei:
- R₈ für eine C₁-C₂₀-, vorzugsweise eine C₁-C₁₄-Alkylkette steht,
- Z⁻ für eine negativ geladene funktionelle Gruppe steht, die an R₈ gebunden ist und vorzugsweise aus Sulfat und Carboxylat ausgewählt ist,
- Z⁺ für eine positiv geladene funktionelle Gruppe steht, vorzugsweise für ein Ammonium.

12. Verfahren nach Anspruch 1, **dadurch gekennzeichnet, dass** das Tensid aus den amphoteren Tensiden ausgewählt ist.

13. Verfahren nach Anspruch 12, **dadurch gekennzeichnet, dass** das Tensid aus den Aminosäuren und den Seifen ausgewählt ist.

14. Verfahren nach Anspruch 1, **dadurch gekennzeichnet, dass** das Tensid aus den neutralen Tensiden ausgewählt ist.

15. Verfahren nach Anspruch 14, **dadurch gekennzeichnet, dass** das Tensid aus den Polyethern, den polyethoxylierten Tensiden, den Derivaten von Polyethylenglykol und den Polyethern, den Tensiden vom Typ CᵢEⱼ, bei denen es sich um Polyethylenglykollaurylether wie etwa POE23 oder Brij ® 35, C₁₂E₂₃, Tween 20®, Tween 80®, Triton X100®, Triton X100-R® handeln kann, den Polyolen, den Glucosealkylaten wie beispielsweise Glucosehexanat ausgewählt ist.

16. Verfahren nach einem beliebigen der vorhergehenden Ansprüche, **dadurch gekennzeichnet, dass** das Lösemittel polar-protisch ist.

17. Verfahren nach Anspruch 16, **dadurch gekennzeichnet, dass** das Lösemittel aus Wasser, Toluol, Essigsäure, Methanol, Ethanol, Acetonitril, Dimethylformamid oder deren Mischungen ausgewählt ist.

18. Verfahren nach einem beliebigen der vorhergehenden Ansprüche, **dadurch gekennzeichnet, dass** die Konzentration an Tensid im Bereich von der cmc bis zum hundertfachen Wert der cmc liegt.

19. Verfahren nach einem beliebigen der vorhergehenden Ansprüche, **dadurch gekennzeichnet, dass** das Verfahren in einer Atmosphäre durchgeführt wird, die an dem Lösemittel der Lösung gesättigt ist.

20. Verfahren nach einem beliebigen der vorhergehenden Ansprüche, **dadurch gekennzeichnet, dass** das Substrat derart beschaffen ist, dass der Kontaktwinkel e des Lösemittels mit dem Substrat mindestens 90 ° beträgt.

21. Verfahren nach den Ansprüchen 1 bis 20, **dadurch gekennzeichnet, dass** Substrat aus einem Metall, einer Metalllegierung oder einem Halbleiter besteht.

22. Verfahren nach den Ansprüchen 1 und 20, **dadurch gekennzeichnet, dass** es sich bei dem Substrat um ein organisches Polymer oder um biologisches Material handelt.

23. Verfahren nach den Ansprüchen 20 bis 22, **dadurch gekennzeichnet, dass** das Substrat in makroskopischem Maßstab eben ist.

24. Verfahren nach Anspruch 1, **dadurch gekennzeichnet, dass** der Schritt der Filmbildung mit Hilfe der mechanischen Einwirkung eines Filmbildungsmittels, welches die Oberfläche der Lösung durchquert, erfolgt.

25. Verfahren nach Anspruch 24, **dadurch gekennzeichnet, dass** das Filmbildungsmittel aus einem feststofflichen Träger besteht, in welchem ein Hohlraum ausgespart ist.

26. Verfahren nach Anspruch 24, **dadurch gekennzeichnet, dass** das Mittel die Bildung von Filmen ermöglicht, die nicht eben sind.

27. Verfahren nach Anspruch 24, **dadurch gekennzeichnet, dass** es sich bei dem Mittel um ein Gas handelt.

28. Verfahren nach Anspruch 1, **dadurch gekennzeichnet, dass** der Film aufgebracht wird, wenn er in Form eines gewöhnlichen Schwarzfilms oder eines Newtonschen Schwarzfilms vorliegt.

29. Verfahren nach einem beliebigen der vorhergehenden Ansprüche, **dadurch gekennzeichnet, dass** die Lösung molekulare Einheiten aufweist.

30. Verfahren nach Anspruch 29, **dadurch gekennzeichnet, dass** die molekularen Einheiten aus den Einheiten ausgewählt sind, deren Größe einen Wert von ungefähr einhundert Ångström nicht überschreitet.

31. Verfahren nach Anspruch 30, **dadurch gekennzeichnet, dass** es sich bei den molekularen Einheiten um organische Moleküle und insbesondere um Proteine oder Cellulosefasern handelt.

32. Verfahren nach Anspruch 30, **dadurch gekennzeichnet, dass** es sich bei den molekularen Einheiten um organische Nanopartikel, um anorganische Nanopartikel halbleitender, metallischer Art oder metallischer Art mit organischer Umhüllung handelt.

33. Verfahren nach den Ansprüchen 29 bis 32, **dadurch gekennzeichnet, dass** es darüber hinaus einen Schritt des Untersuchens von molekularen Einheiten umfasst, welche innerhalb eines Films angeordnet sind, der auf ein Substrat aufgebracht wurde.

34. Substrat, das von einem Film bedeckt ist, welcher mittels eines Verfahrens nach einem beliebigen der Ansprüche 1 bis 32 erhalten wurde.

35. Vorrichtung zum Aufbringen nanometrischer Dünnfilme auf ein Substrat, ausgehend von einer flüssigen Lösung, die mindestens ein Tensid enthält, gemäß einem beliebigen der Ansprüche 1 bis 33, **dadurch gekennzeichnet, dass** sie Folgendes umfasst:
- ein Mittel (3) zur Bildung eines Film, ausgehend von der Oberfläche der Lösung,
- ein Mittel (4) zur Verformung der Oberfläche des Films, der ausgehend von der Oberfläche der Lösung gebildet wurde.

36. Vorrichtung nach Anspruch 35, **dadurch gekennzeichnet, dass** in dem Bildungsmittel (3) ein Drainagemittel vorgesehen ist.

## Claims

1. A method for depositing a thin nanometric film on a substrate from a liquid solution containing at least one surfactant at a concentration greater than or equal to critical micelle concentration (cmc), **characterised in that** it includes the following steps:
- forming a film from the solution using a film formation means,
- contacting the film formed from the solution with the substrate,
- depositing the film on the substrate.

2. A method according to claim 1, **characterised in that** the surfactant is selected among anionic surfactants.

3. A method according to claim 2, **characterised in that** the surfactant is selected among compounds of the following formula (III):
R₆-A⁻ ,Cat⁺ (III)
wherein:
- R6 represents a C₁-C₂₀, preferably C₁-C₁₄ aryl or alkyl group,
- A⁻ is an anion or a polyanion selected in particular among sulfonates, sulfates, phosphates, carboxylates, sulfosuccinates,
- Cat⁺ is a cationic counter-ion, preferably selected among the ammonium ion (NH₄⁺), quaternary ammoniums such as tetrabutylammonium, and alkaline cations such as Na⁺, Li⁺ and K⁺.

4. A method according to claims 1, 2 or 3, **characterised in that** the surfactant is selected among dodecylsulfate, dodecylbenenesulfonate, palmitate, stearate, myristate, di(2-ethylhexyl) sulfosuccinate, methylbenzene sulfonate and ethylbenzene sulfonate, dipalmitoyl phosphatidylglycerol, in the presence of an alkaline cation.

5. A method according to claim 1, **characterised in that** the surfactant is selected among cationic surfactant.

6. A method according to claim 5, **characterised in that** the surfactant is selected among compounds of the following formula (IV):
(R₇)₄-N⁺ , An⁻ (IV)
wherein:
- the groups R₇, identical or different, represent an aliphatic chain, for instance a C₁-C₂₀, preferably C₁-C₁₄ alkyl chain,
- An⁻ is an anion counter-ion selected in particular among boron derivatives such as tetrafluoroborate or halogenide ions such as F⁻, Br⁻, I⁻ or Cl⁻.

7. A method according to claim 6, **characterised in that** R₇ is a methyl, ethyl, propyl, butyl or tetradecyl group.

8. A method according to claim 6, **characterised in that** the surfactant is selected among tetradecyltrimethyl ammonium bromide (TTAB or CTAB), alkyl-pyridinium halogenides carrying a C₁-C₁₈ aliphatic chain, alkylammonium halogenides such as hexadecyltrimethylammonium bromide or dodecyltrimethyl-ammonium bromide or still phospholipids for instance N-[1-(2,3-dioleyloxy)propyl]trimethylammonium salt.

9. A method according to claim 1, **characterised in that** the surfactant is selected among zwitterionic surfactants.

10. A method according to claim 1 or 9, **characterised in that** the surfactant is selected among N,N sodium dimethyldodecylammoniumbutanate, sodium dimethyldodecylammonium propanate and amino acids, dodecyl-phosphocholine (C12PC), phospholipids such as dimyristoyl phosphatidylcholine, dipalmitoyl phosphatidylcholine, dioleoyl phosphatidylcholine, dimyristoyl phosphate-dylethanolamine, dipalmitoyl phosphatidylethanolamine, and dioleoyl phosphatidylethanolamine.

11. A method according to claim 1, **characterised in that** the surfactant is selected among compounds of the following formula (V):
Z⁻-R₈-Z⁺ (V)
wherein:
- R₈ represents a C₁-C₂₀, preferably C₁-C₁₄ alkyl chain,
- Z⁻ represents a negatively charged function carried by R⁸, preferably selected among sulfate and carboxylate,
- Z⁺ represents a positively charged function, preferably ammonium.

12. A method according to claim 1, **characterised in that** the surfactant is selected among amphoteric surfactants.

13. A method according to claim 12, **characterised in that** the surfactant is selected among amino acids and soaps.

14. A method according to claim 1, **characterised in that** the surfactant is selected among neutral surfactants.

15. A method according to claim 14, **characterised in that** the surfactant is selected among polyethers, polyethoxylated surfactants, polyethyleneglycol derivatives and polyethers, CiEj-type surfactants whereof polyethyleneglycol laurylether such as POE23 or Brij ® 35, C₁₂E₂₃, Tween 20®, Tween 80®, Triton X100®, Triton X100-R®, polyols, glucose alkylates such as for instance glucose hexanate.

16. A method according to any of the previous claims, **characterised in that** the solvent is polar protic.

17. A method according to claim 16, **characterised in that** the solvent is selected among water, toluene, acetic acid, methanol, ethanol, acetonitrile, dimethylformamide or the mixtures thereof.

18. A method according to any of the previous claims, **characterised in that** the surfactant concentration ranges between cmc and hundred times the cmc value.

19. A method according to any of the previous claims, **characterised in that** the method is realised under a solution solvent-saturated atmosphere.

20. A method according to any of the previous claims, **characterised in that** the substrate is such that the contact angle θ of the solvent on the substrate is greater than or equal to 90°.

21. A method according to claims 1 and 20, **characterised in that** the substrate is formed of a metal, a metal alloy or a semiconductor.

22. A method according to claims 1 and 20, **characterised in that** the substrate is an organic polymer or biological material.

23. A method according to claims 20 to 22, **characterised in that** the substrate is planar at a macroscopic scale.

24. A method according to claim 1, **characterised in that** the step of forming the film is realised using mechanical action of a film formation means traversing the surface of the solution.

25. A method according to claim 24, **characterised in that** the film formation means is formed by a solid medium within which an empty space is provided.

26. A method according to claim 24, **characterised in that** the means enables the formation of non planar films.

27. A method according to claim 24, **characterised in that** the means is a gas.

28. A method according to claim 1, **characterised in that** the film is deposited when it is in the form of common black film or Newton black film.

29. A method according to any of the previous claims, **characterised in that** the solution includes molecular entities.

30. A method according to claim 29, **characterised in that** the molecular entities are selected among the entities whereof the size does not exceed a hundred Angströms.

31. A method according to claim 30, **characterised in that** the molecular entities are organic molecules and in particular proteins or cellulose fibres.

32. A method according to claim 30, **characterised in that** the molecular entities are organic nanoparticles, semi-conducting inorganic nano-particles, simply metallic or metallic with an organic coating.

33. A method according to claims 29 to 32, **characterised in that** it includes moreover a step of analysing molecular entities arranged within the film deposited on a substrate.

34. A substrate covered with a film obtained by a method according to any of the claims 1 to 32.

35. A device for depositing thin nanometric films on a substrate from a liquid solution containing at least one surfactant, according to any of the claims 1 to 33, **characterised in that** it includes:
- a means (3) of forming a film from the surface of the solution,
- a means (4) of deforming the surface of the film formed from the surface of the solution.

36. A device according to claim 35, **characterised in that** a drainage means is provided in the formation means (3).
